## Europäisches Patentamt

## European Patent Office

## Office européen des brevets

(19)

(11) Veröffentlichungsnummer: **0 175 798**
**B1**

(12) **EUROPÄISCHE PATENTSCHRIFT**

(45) Veröffentlichungstag der Patentschrift:
14.12.88

(51) Int. Cl.⁴: **H 02 K 5/167, H 02 K 3/34**

(21) Anmeldenummer: 84111370.7

(22) Anmeldetag: 24.09.84

(54) Vorrichtung und Verfahren zur Einstellung des Axialspiels zwischen Rotor und am Stator befestigten Lagern eines Elektromotors.

(43) Veröffentlichungstag der Anmeldung:
02.04.86 Patentblatt 86/14

(45) Bekanntmachung des Hinweises auf die Patenterteilung:
14.12.88 Patentblatt 88/50

(84) Benannte Vertragsstaaten:
DE FR GB IT SE

(56) Entgegenhaltungen:
EP-A-0 065 585
FR-A-1 158 589
GB-A-2 066 417
US-A-4 164 674

(73) Patentinhaber: **Siemens Aktiengesellschaft Berlin und München, Wittelsbacherplatz 2, D-8000 München 2 (DE)**

(72) Erfinder: **Adam, Peter, Allerseeweg 25, D-8706 Höchberg (DE)**
Erfinder: **Schilling, Werner, Untere Goldbergstrasse 20, D-8700 Würzburg (DE)**
Erfinder: **Lindner, Adolf, Dipl.- Ing., Grasholzstrasse 13, D-8702 Rottendorf (DE)**
Erfinder: **Wehner, Ewald, Flürleinstrasse 12, D-8700 Würzburg (DE)**

EP 0 175 798 B1

LIBER, STOCKHOLM 1988

## Beschreibung

Die Erfindung bezieht sich auf eine Vorrichtung und ein Verfahren zur Einstellung des Axialspiels zwischen dem Rotor und den am Stator befestigten Lagern eines Elektromotors; eine derartige Vorrichtung ist aus der europäischen Patentanmeldung 0 065 585 bekannt.

Bei dieser bekannten Vorrichtung wird die als gesondertes Bauteil gefertigte Distanzhülse vor ihrem Aufdrücken auf die Rotorwelle in eine entsprechend vorzusehende Ausnehmung in einem an die Isolierendscheibe axial vorstehend angeformten Wellenbund eingepreßt. Durch diese Vormontage der Distanzhülse im Wellenbund der Isolierendscheibe ergibt sich bei vorteilhaft kurzer axialer Baulänge insbesondere eine wesentliche Vereinfachung bei der Montage des Motors und der Einstellung des Axialspiels.

Gemäß Aufgabe der vorliegenden Erfindung soll unter Beibehaltung der einfachen Montage und Einstellmöglichkeit des Axialspiels sowie der axial kurzen Baulänge die Herstellung der aus Distanzhülse und Isolierendscheibe bestehenden Montageeinheit weiter vereinfacht werden.

Die Lösung dieser Aufgabe gelingt bei einer Vorrichtung der eingangs genannten Art durch die Lehre des Anspruchs 1 bzw. des Anspruchs 2. Die Gegenstände der Ansprüche 3 bis 5 betreffen jeweils vorteilhafte Ausgestaltungen der Erfindung; die Ansprüche 6 bis 8 betreffen Verfahren zur Einstellung des Axialspiels mit einer Vorrichtung gemäß Anspruch 1 bzw. Anspruch 2.

Durch die erfindungsgemäße Zusammenfassung von Distanzhülse und an sich bereits vorhandener, zu einem anderen Zweck mitbenutzten Isolierendscheibe zu einem einzigen Kunststoff-Spritzgußteil können in für eine automatengerechte Herstellung vorteilhafter Weise weitere Fertigungsschritte eingespart werden. Da die Distanzhülse gleichzeitig die Führung der Isolierendscheibe bei deren Aufdrücken auf die Welle übernimmt, kann gegebenenfalls die axiale Baulänge der Baueinheit Isolierendscheibe-Distanzhülse weiter vermindert werden, wodurch sich deren Einsatz insbesondere für Synchronkleinstmotoren empfiehlt.

Durch die abreißenden Stege der Vorrichtung gemäß Anspruch 1 läßt sich die Distanzhülse in die Wellenbohrung der Isolierendscheibe eintauchen, ohne daß dabei eine radiale Vergrößerung der Wellenbohrung und damit des Läuferblechpaketes notwendig ist. Gleichzeitig kann die Distanzhülse sowohl an der Rotorwelle als auch in der Wellenbohrung an der Isolierendscheibe reibschlüssig geführt werden.

Durch die GB-A-2 066 417 ist zwar eine bei Elektrokleinmotoren das Axialspiel begrenzende Kunststoff-Buchse mit einer einstückig angespritzten an der Stirnseite des Rotors anliegenden Scheibe bekannt, jedoch soll die Buchse zwischen dem Rotor und den· Lagerkörpern des Rotors auf der Rotorwelle nicht betriebsmäßig fixiert, sondern frei verschieblich angeordnet und mittels der nicht mit einer Isolierendscheibe vergleichbaren radial angeformten Scheiben elastisch federnd am Rotor abgestützt sein.

Die Erfindung sowie weitere vorteilhafte Ausgestaltungen werden im folgenden anhand schematisch dargestellter Ausführungsbeispiele in der Zeichnung näher erläutert. Darin zeigen:

Fig. 1 einen Längsschnitt durch einen Dauermagnet-Kommutatormotor nach Abreißen der Zwischenstege,

Fig. 2 in vergrößertem Detailausschnitt die rechte Isolierendscheibe in Fig. 1 mit einstückig über die noch nicht abgerissenen Zwischenstege verbundener Distanzhülse,

Fig. 3 eine stirnseitige Draufsicht auf die Isolierendscheibe mit angeformter Distanzhülse gemäß Fig. 2,

Fig. 4 in einem Teillängsschnitt durch einen Dauermagnet Kommutatormotor eine weitere Ausführung einer Isolierendscheibe mit einstückig über ausknickbare elastisch nachgebende Zwischenstege verbundener Distanzhülse in gestrecktem Zustand der Zwischenstege,

Fig. 5 die Ausführung gemäß Fig. 2 nach Einstellung des Axialspiels und dementsprechend radial weggeknickten Zwischenstegen,

Fig. 6 in einem Teillängsschnitt durch einen Dauermagnet Kommutatormotor eine weitere Ausgestaltung der Erfindung mit einer Isolierendscheibe und über scharnierartig, elastisch nachgebende Zwischen stege verbundener Distanzhülse.

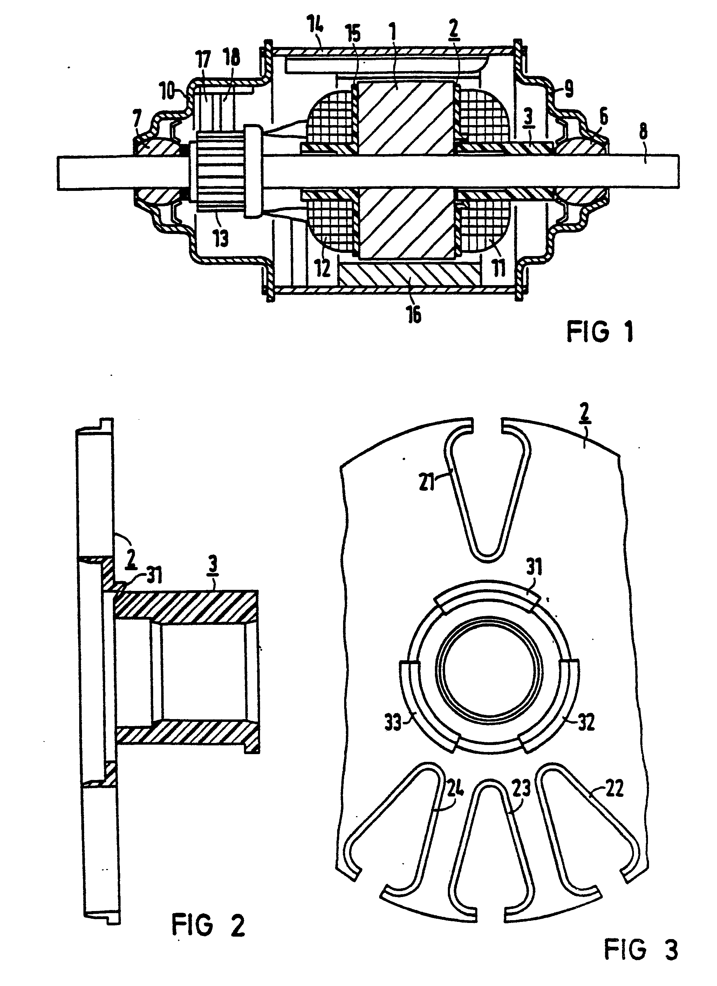

Fig. 1 zeigt einen Dauermagnet-Kommutatormotor. An der Innenumfangsfläche des Statorgehäuses 14 sind das Magnetfeld erzeugende Dauermagnete 16 angeordnet. Stirnseitig sind am Statorgehäuse 14 Lagerbügel 9, 10 befestigt. Die Lagerbügel 9, 10 nehmen Kalottenlager 6, 7 auf, in denen eine Rotorwelle 8 drehbar gelagert ist. Auf die Rotorwelle 8 ist ein Rotorblechpaket 1, z.B. im Preßsitz, gehalten. Auf dem linken Wellenende der Rotorwelle 8 ist innerhalb des Statorgehäuses 14 ein Kommutator 13 aufgeklebt. Hammer-Bürstenhalter 17, 18 sind in hier nicht näher dargestellter Weise in einer Statorgehäuse eingeschobenen Bürstenbrücke gelagert und mit einer äußeren Anschlußleitung verbunden. An die Lamellen des Kommutators 13 sind die Wicklungsenden der gewickelten Rotorwicklung angeschlossen, von der in Fig. 1 die stirnseitigen Wickelköpfe die Bezugszeichen 11, 12 tragen.

Zur elektrischen Isolierurng der Wickelköpfe 11, 12 gegenüber den Stirnseiten des Rotorblechpaketes 1 und gegenüber der Rotorwelle 8 sind Kunststoff-Isolierendscheiben 2, 15 mit je einem axial angeformten und zumindest im Bereich der Wickelköpfe die Rotorwelle 2 übergreifenden Wellenbund vorgesehen. Im Fall der rechten Isolierscheibe 2 wird der Wellenbund der Isolierendscheibe 2 durch die Distanzhülse 3 gebildet, die zusammen mit der Isolierendscheibe 2 als einstückiges Spritzgußteil hergestellt ist. Die Ausgestaltung der Isolierendscheibe 2 und der einstückigen angeformten Distanzhülse 3 ist in ihren Details in den Ausschnittbildern gemäß Fig. 2 und Fig. 3 deutlicher dargestellt.

Fig. 2 zeigt das als einstückiges Spritzgußteil aus Isolierendscheibe 2 und Distanzhülse 3 spritzgegossenes Bauteil vor der Einstellung des Axialspiels. Die Distanzhülse 3 ist an ihrem linken Ende über drei über den Randumfang verteilte Zwischenstege 31, 32, 33 mit der Isolierendscheibe 2 verbunden. Beim Aufschieben der Isolierendscheibe bis zur Anlage gegen die rechte Stirnseite des Rotorblechpaketes 1 dient dabei die Distanzhülse 3 gleichzeitig als auf der Rotorwelle 8 abgestützte Führungshilfe. In Fig. 3 sind zusätzlich an die Isolierendscheibe angeformte Nutauskleidungen 21 bis 24 angedeutet, die um ein geringes axiales Maß in die Nuten eingreifen.

Die Einstellung der Distanzhülse 3 zur Sicherung eines bestimmten Axialspiels zwischen dem Rotor und den Lagern des Ständergehäuses erfolgt zweckmäßigerweise nach dem Bewickeln des Rotorblechpaketes 1, bei dem die Isolierendhülse 2 durch den Wickelzug zusätzlich in ihrer stirnseitigen Lage am Rotorblechpaket 2 gesichert wird. Beim Aufdrücken der Isolierendscheibe 2 mit einstückig angeformter Distanzhülse 3 drückt ein Werkzeug auf die Distanzhülse 3 und hält gleichzeitig die äußere Stirnseite der Isolierendscheibe 2 fest. Die Einstellung des Axialspiels kann zweckmäßigerweise nach dem Einsetzen des bewickelten Rotors in dem rechten Lagerbügel mit dem Aufsetzen des zweiten linken Lagerbügels erfolgen, wobei durch den ausgeübten Axialdruck sich das Rotorblechpaket mit der an der Stirnseite anliegenden Isolierendscheibe 2 relativ zur Distanzhülse 3 verschieben kann, nachdem durch den Axialdruck die Zwischenstege 31 bis 33 abgerissen sind. In vorteilhafter Weise ist durch entsprechende Passung vorgesehen, daß dabei bei dem Eintauchen des linken Endes der Distanzhülse 3 in die Wellenbohrung der Isolierendscheibe 2 der Außenumfang der Distanzhülse 3 an dem Innenumfang der Wellenbohrung der Isolierendscheibe 2 reibschlüssig geführt wird.

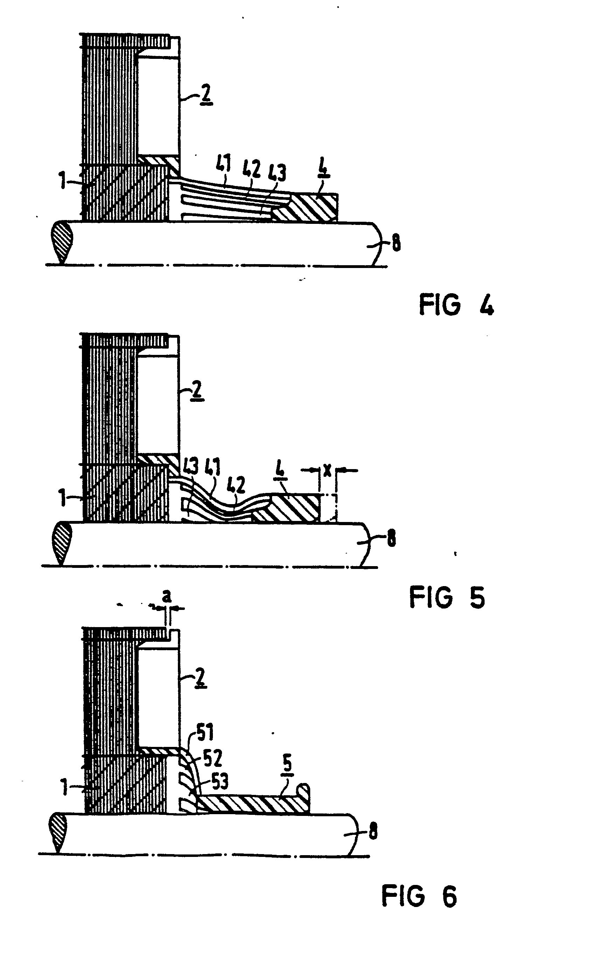

Fig. 4, 5 zeigen eine weitere Ausführung einer erfindungsgemäßen Vorrichtung zur Einstellung des Axialspiels, bei der eine Distanzhülse 4 über am Umfang verteilte elastisch nach gebende Zwischenstege verbunden ist, von denen in Fig. 4 drei Zwischenstege 41 bis 43 dargestellt sind. Fig. 5 zeigt die Lage der Distanzhülse 4 relativ zur Isolierendscheibe 2, nachdem zur Einstellung eines bestimmten Axialspiels die im Preßsitz auf der Rotorwelle 8 gehaltene Distanzhülse 4 um das Einstellmaß "x" nach links auf das Rotorblechpaket 1 zubewegt ist; dabei knicken die Zwischenstege 41 bis 43 nach radial innen aus.

Fig. 6 zeigt eine weitere erfindungsgemäße Ausgestaltung der Erfindung, bei der eine ebenfalls im Preßsitz auf die Rotorwelle 8 aufgedrückte Distanzhülse 5 mit der Isolierendscheibe 2 über am Umfang verteilte scharnierartig angeformte, elastisch nachgebende Zwischenstege verbunden ist, von denen in der hier dargestellten Ansicht drei Zwischenstege 51 bis 53 angedeutet sind. Die Isolierendscheibe 2 ist hier nur soweit auf die Rotorwelle 8 aufgeschoben, daß ein geringer axialer Abstand "a" zur Stirnseite des Rotorblechpaketes 1 verbleibt. Beim anschließenden Bewickeln des Rotorblechpaketes 1 wird die Isolierendscheibe 2 aufgrund des Wickelzuges gegen die Stirnseite des Rotorblechpaketes 1 angezogen und "kippt" dabei aufgrund der scharnierartigen Verbindung um einen geringen Winkel gegenüber der unverändert positionierten Distanzhülse 5. Diese wird erst anschließend, wie zuvor für die Ausführungsbeispiele nach Fig. 4, 5 beschrieben, zur Axialspieleinstellung auf das Rotorblechpaket 1 zu verschoben, wobei sich der axiale Abstand "a" verringert; durch diesen nach einer Ausgestaltung der Erfindung vorgesehenen Abstand kann jedoch die bei der Axialspieleinstellung zu berücksichtigende maximal überbrückbare Toleranzbreite vorteilhaft vergrößert werden. Zweckmäßigerweise ist je nach radialer Wandstärke der Distanzhülse 5 zusätzlich einstückig ein Anlaufkragen zur Anlagemöglichkeit gegen das gegenüberliegende Lager angeformt.

**Patentansprüche**

1. Vorrichtung zur Einstellung des Axialspiels zwischen dem Rotor und den am Stator befestigten Lagern (6, 7) eines Elektromotors mit einer auf die Rotorwelle (8) aufgedrückten, betriebsmäßig fixierten Distanzhülse (3), die von einer zur festen stirnseitigen Anlage an dem Rotorblechpaket (1) vorgesehenen Isolierendscheibe (2) gehalten ist, dadurch gekennzeichnet, daß die Distanzhülse (3 bzw. 5) zusammen mit der Isolierendscheibe (2) aus einem einstückigen Spritzgußteil mit einer zwischenliegenden Sollschwachstelle in Form von über den Umfang verteilten ausreißbaren bzw. ausbrechbaren Zwischenstegen (31, 32, 33 - FIG. 1 - 3) gebildet ist.

2. Vorrichtung zur Einstellung des Axialspiels zwischen dem Rotor und den am Stator befestigten Lagern (6, 7) eines Elektromotors mit einer auf die Rotorwelle (8) aufgedrückten, betriebsmäßig fixierten Distanzhülse (4 bzw. 5), die von einer zur festen stirnseitigen Anlage an dem Rotorblechpaket (1) vorgesehenen Isolierendscheibe (2) gehalten wird, dadurch gekennzeichnet, daß die Distanzhülse (4 bzw. 5) zusammen mit der Isolierendscheibe (2) aus einem einstückigen Spritzgußteil mit einer zwischenliegenden Sollschwachstelle in Form von über den Umfang verteilten scharnierartig angeformten, elastisch nachgebenden Zwischenstegen (41, 42, 43 bzw. 51, 52, 53 - FIG. 4 - 6) gebildet ist.

3. Vorrichtung nach Anspruch 1 oder 2, dadurch gekennzeichnet, daß der maximale Außenumfang der Distanzhülse (3 bzw. 4 bzw. 5) kleiner als der Innendurchmesser der Wellenbohrung der Isolierendscheibe (2) ist.

4. Vorrichtung nach Anspruch 1 oder 2, dadurch gekennzeichnet, daß die Distanzhülse (3 bzw. 4 bzw. 5) jeweils der Isolierendscheibe (2) axial vorgelagert ist.

5. Vorrichtung nach Anspruch 1, dadurch gekennzeichnet, daß die Distanzhülse (3) betriebsmäßig in die Wellenbohrung der Isolierendscheibe (2) eingetaucht und mit ihrer Außenfläche an der Innenfläche der Wellenbohrung reibschlüssig gehalten ist.

6. Verfahren zur Einstellung des Axialspiels mit einer Vorrichtung gemäß Anspruch 1, gekennzeichnet durch folgende Verfahrensschritte:
a) Aufdrücken der Isolierendscheibe (2) mit der einstückig angespritzten Distanzhülse (3 - FIG. 1 - 3) über das eine Ende der Rotorwelle (8) bis zum Anliegen der Isolierendscheibe (2) an der einen Stirnseite des Rotorblechpaketes (1),
b) Aufdrücken einer weiteren Isolierendscheibe (15) auf die andere Stirnseite des Rotorblechpaketes (1) und gegebenenfalls Aufkleben eines Kommutators (13) auf das über diese Stirnseite vorstehende andere Wellenende der Rotorwelle (8),
c) Bewickeln des Rotors,
d) Einsetzen des bewickelten Rotors in das Lager (7) des mit dem Stator verbundenen einen kommutatorseitigen Lagerbügels (10),
e) Aufsetzen des anderen Lagerbügels (9) und dabei durch Axialdruck Abreißen der Zwischenstege (31, 32, 33) und Verschieben der sowohl zur Rotorwelle (8) als auch zur Isolierendscheibe (2) im Preßsitz gehaltenen Distanzhülse (3) relativ zur ruhenden Isolierendscheibe (2),
f) gegebenenfalls Feineinstellung des Axialspiels durch Bewegen des Rotors relativ zur Distanzhülse (3) bei am Stator anliegendem anderen Lagerbügel (9).

7. Verfahren zur Einstellung des Axialspiels mit einer Vorrichtung gemäß Anspruch 2, gekennzeichnet durch folgende Verfahrensschritte:
a) Aufdrücken der Isolierendscheibe (2) mit der einstückig angespritzten Distanzhülse (4 - FIG 4, 5) über das eine Ende der Rotorwelle (8) bis zum Anliegen der Isolierendscheibe (2) an der einen Stirnseite des Rotorblechpaketes (1),
b) Aufschieben einer weiteren Isolierendscheibe (15) auf die andere Stirnseite des Rotorblechpaketes (1) und gegebenenfalls Aufkleben eines Kommutators (13) auf das über diese Stirnseite vorstehende andere Wellenende der Rotorwelle (8),
c) Bewickeln des Rotors,
d) Einsetzen des bewickelten Rotors in das Lager (7) des mit dem Stator verbundenen einen kommutatorseitigen Lagerbügels (10),
e) Aufsetzen des anderen Lagerbügels (9) und dabei durch Axialdruck Verschieben der zur Rotorwelle (8) im Preßsitz gehaltenen Distanzhülse (4) relativ zur fixierten Isolierendscheibe (2),
f) gegebenenfalls Feineinstellung des Axialspiels durch Bewegen des Rotors relativ zur Distanzhülse (4) bei am Stator anliegendem anderen Lagerbügel (9).

8. Verfahren zur Einstellung des Axialspiels mit einer Vorrichtung gemäß Anspruch 2, gekennzeichnet durch folgende Verfahrensschritte:
a) Aufdrücken der Isolierendscheibe (2) mit der einstückig angespritzten Distanzhülse (5, FIG. 6) über oas eine Ende der Rotorwelle (8) bis auf einen geringen axialen Abstand "a" zwischen der Isolierendscheibe (2) und der Stirnseite des Rotorblechpaketes (1),
b) Aufschieben einer weiteren Isolierendscheibe (15) auf die andere Stirnseite des Rotorblechpaketes (1) und gegebenenfalls Aufkleben eines Kommutators (13) auf das über diese Stirnseite vorstehende andere Wellenende der Rotorwelle (8),
c) Bewickeln des Rotors mit gleichzeitigem Festanziehen der Isolierendscheibe (2) gegen die Stirnseite des Rotorblechpaketes (1) bei unveränderter axialer Stellung der Distanzhülse (5),
d) Einsetzen des bewickelten Rotors in das Lager (7) des mit dem Stator verbundenen einen kommutatorseitigen Lagerbügels (10),
e) Aufsetzen des anderen Lagerbügels (9) und dabei durch Axialdruck Verschieben der zur Rotorwelle (8) im Preßsitz gehaltenen Distanzhülse (5) relativ zur fixierten Isolierendscheibe (2),
f) gegebenenfalls Feineinstellung des Axialspiels durch Bewegung des Rotors relativ zur Distanzhülse (5) bei am Stator anliegendem anderen Lagerbügel (9).

## Claims

1. Device for adjusting the axial play between the rotor and the bearings (6, 7) fixed to the stator of an electric motor with a distance sleeve (3) fixed according to operations and impressed onto the rotor shaft (8), which sleeve is held by an insulating end plate (2) provided for firm installation on the front end on the rotor bundle of laminations (1), characterised in that the distance sleeve (3 or 5) is formed together with the insulating end plate (2) from a one-part injection moulded part with a desired weak point lying between in the form of intermediate bars (31, 32, 33 - fig. 1 - 3) distributed over the periphery and capable of being torn out or broken out.

2. Device for adjusting the axial play between the rotor and the bearings (6, 7) fixed to the stator of an electric motor with a distance sleeve (4 or 5) fixed according to operations and impressed onto the rotor shaft (8), which sleeve is held by an insulating end plate (2) provided for firm installation on the front end on the rotor bundle of laminations (1),
characterised in that,
the distance sleeve (4 or 5) is formed together with the insulating end plate (2) from a one-part injection moulded part with a desired weak point lying between in the form of pre-formed hinge-like, elastically yielding intermediate bars (41, 42, 43 or 51, 52, 53 - fig. 4 - 6) distributed over the periphery.

3. Device according to claim 1 or 2,
characterised in that the maximum outer circumference of the distance sleeve (3 or 4 or 5) is smaller than the inner diameter of the shaft bore of the insulating end plate (2).

4. Device according to claim 1 or 2,
characterised in that the distance sleeve (3 or 4 or 5) in each case is introduced to the insulating end-plate (2) axially.

5. Device according to claim 1,
characterised in that the distance sleeve (3) dips into the shaft bore of the insulating end plate (2) according to operations and is held with its outer surface on the inner surface of the shaft bore free of friction.

6. Method of adjusting the axial play with a device according to claim 1,
characterised by the following stages of the method:
a) impressing the insulating end plate (2) with the one-part injected-on distance sleeve (3 - fig. 1 - 3) over the one end of the rotor shaft (8) until the insulating end plate (2) lies on the one front side of the rotor bundle of laminations (1),
b) impressing a further insulating end plate (15) on the other front side of the rotor bundle of laminations (1) and possible sticking of a commutator (13) onto the shaft end of the rotor shaft (8) protruding over this front side,
c) winding the rotor,
d) installing the wound rotor into the bearing (7) of the one bearing bracket (10) on the commutator side and connected with the stator,
e) placing the other bearing bracket (9) and with this by axial pressure tearing down the intermediate bars (31, 32, 33) and displacing the distance sleeve (3) held in force fit to the rotor shaft (8) as well as to the insulating end plate (2); relative to the static insulating end plate (2),
f) possible fine adjustment of the axial play by motion of the rotor relative to the distance sleeve (3) with the other bearing bracket (9) resting against the stator.

7. Method for adjusting the axial play with a device according to claim 2,
characterised by the following stages of the method:
a) impressing the insulating end plate (2) with the one-part injected-on distance sleeve (4 - fig. 4, 5) over the one end of the rotor shaft (8) until the insulating end plate (2) lies on the one front side of the rotor bundle of laminations (1),
b) loading a further insulating end plate (15) onto the other front side of the rotor bundle of laminations (1) and possible sticking of a commutator (13) onto the other shaft end of the rotor shaft (8) protruding over this front side,
c) winding the rotor,
d) installing the wound rotor into the bearing (7) of the one bearing bracket (10) on the commutator side and connected with the stator,
e) placing the other bearing bracket (9) and with this by axial pressure displacing the distance sleeve (4) held in force fit to the rotor shaft (8) relative to the fixed insulating end plate (2),
f) possible fine adjustment of the axial play by motion of the rotor relative to the distance sleeve (4) with the other bearing bracket (9) resting against the stator.

8. Method for adjusting the axial play with a device according to claim 2,
characterised by the following stages of the method:
a) impressing the insulating end plate (2) with the one-part injected-on distance sleeve (5 - fig. 6) over the one end of the rotor shaft (8) up to a slight axial distance "a" between the insulating end plate (2) and the front side of the rotor bundle of laminations (1 ),
b) loading a further insulating end plate (15) onto the other front side of the rotor bundle of laminations (1) and possible sticking of a commutator (13) onto the other shaft end of the rotor shaft (8) protruding over this front side,
c) winding the rotor with simultaneous firm tightening of the insulating end plate (2) against the front side of the rotor bundle of laminations (1) with unchanged axial position of the distance sleeve (5),

d) installing the wound rotor into the bearing (7) of the one bearing bracket (10) on the commutator side and connected with the stator,

e) placing the other bearing bracket (9) and with this by axial pressure displacing the distance sleeve (5) held in force fit to the rotor shaft (8), relative to the fixed insulating end plate (2),

f) possible fine adjustment of the axial play by motion of the rotor relative to the distance sleeve (5) with the other bearing bracket (9) resting against the stator.

**Revendications**

1. Dispositif pour régler le jeu axial entre le rotor et les paliers (6, 7) d'un moteur électrique, fixés sur le stator, et comportant une douille-entretoise (3) emmanchée à force sur l'arbre (8) du rotor, bloquée en fonctionnement et maintenue par un disque d'extrémité isolant (2) destiné à s'appliquer frontalement et fermement contre le paquet (1) des tôles du rotor, caractérisé par le fait que la douille-entretoise (3 ou 5) est formée, conjointement avec le disque d'extrémité isolant (2), par une pièce moulée par injection d'un seul tenant comportant une zone intercalée d'affaiblissement de consigne se présentant sous la forme de barrettes intermédiaires (31, 32, 33 - figures 1 - 3) réparties sur la périphérie et pouvant être arrachées ou rompues.

2. Dispositif pour régler le jeu axial entre le rotor et les paliers (6, 7) d'un moteur électrique, fixés sur le stator, et comportant une douille-entretoise (4 ou 5) emmanchée à force sur l'arbre (8) du rotor, bloquée en fonctionnement et maintenue par un disque d'extrémité isolant (2) destiné à s'appliquer frontalement et fermement contre le paquet (1) des tôles du rotor, caractérisé par le fait que la douille-entretoise (4 ou 5) est formée, conjointement avec le disque d'extrémité isolant (2), par une pièce moulée par injection d'un seul tenant comportant une zone intercalée d'affaiblissement de consigne se présentant sous la forme de barrettes intermédiaires (41, 42, 43 ou 51, 52, 53 - figures 4 - 6) réparties sur la périphérie, réalisées par façonnage sous la forme d'une charnière et fléchissant élastiquement.

3. Dispositif suivant la revendication 1 ou 2, caractérisé par le fait que le contour extérieur maximum de la douille-entretoise (3 ou 4 ou 5) est inférieur au diamètre intérieur du perçage de passage de l'arbre dans le disque d'extrémité isolant (2).

4. Dispositif suivant la revendication 1 ou 2, caractérisé par le fait que la douille-entretoise (3 ou 4 ou 5) est respectivement montée axialement en avant du disque d'extrémité isolant (2).

5. Dispositif suivant la revendication 1, caractérisé par le fait que la douille-entretoise (3) est insérée, en fonctionnement, dans le perçage d'arbre traversant le disque d'extrémité isolant (2) et est maintenue par sa surface extérieure, selon une liaison par friction, contre la surface intérieure du perçage de passage de l'arbre.

6. Procédé pour régler le jeu axial à l'aide d'un dispositif selon la revendication 1, caractérisé par les phases opératoires suivantes consistant à:

a) emmancher à force le disque d'extrémité isolant (2) muni de la douille-entretoise (3 - figure 1 - 3) moulée par injection d'un seul tenant avec le disque, sur une extrémité de l'arbre (8) du rotor, jusqu'à ce que le disque (2) s'applique contre une face frontale du paquet (1) des tôles du rotor,

b) emmancher à force un autre disque d'extrémité isolant (15) sur l'autre face frontale du paquet (1) des tôles du rotor et éventuellement fixer par collage un collecteur (13) sur l'autre extrémité, qui fait saillie sur cette face frontale, de l'arbre (8) du rotor,

c) bobiner le rotor,

d) introduire le rotor bobiné dans le flasque de palier (10) situé du côté du collecteur et relié au stator,

e) monter l'autre flasque de palier (9) et, en exerçant une pression axiale, arracher les barrettes intermédiaires (31, 32, 33) et déplacer la douille-entretoise (3) maintenue selon un ajustement pressé aussi bien sur l'arbre (8) du rotor que dans le disque d'extrémité isolant (2), par rapport au disque d'extrémité isolant (2) fixe, et

f) éventuellement régler de façon précise le jeu axial en déplaçant le rotor par rapport à la douille-entretoise (3) alors que l'autre flasque de palier (9) est appliqué contre le stator.

7. Procédé pour régler le jeu axial à l'aide d'un dispositif suivant la revendication 2, caractérisé par les phases opératoires suivantes, consistant à:

a) emmancher à force le disque d'extrémité isolant (2) muni de la douille-entretoise (4 - figure 4, 5) moulée par injection d'un seul tenant avec le disque, sur une extrémité de l'arbre (8) du rotor, jusqu'à ce que le disque (2) s'applique contre une face frontale du paquet (1) des tôles du rotor,

b) emmancher à force un autre disque d'extrémité isolant (15) sur l'autre face frontale du paquet (1) des tôles du rotor et éventuellement fixer par collage un collecteur (13) sur l'autre extrémité, qui fait saillie sur cette face frontale, de l'arbre (8) du rotor,

c) bobiner le rotor

d) introduire le rotor bobiné dans le flasque de palier (10) situé du côté du collecteur et relié au stator,

**0 175 798**

e) monter l'autre flasque de palier (9) et, moyennant l'application d'une pression axiale, déplacer la douille- entretoise (4) maintenue selon un ajustement serré sur l'arbre (8) du rotor, par rapport au disque d'extrémité isolant fixe (2),

f) éventuellement régler de façon précise le jeu axial au moyen du déplacement du rotor par rapport à la douille- entretoise (4), alors que l'autre flasque de palier (9) est appliqué contre le stator.

8. Procédé pour régler le jeu axial à l'aide d'un dispositif suivant la revendication 2, caractérisé par les phases opératoires suivantes consistant à:

a) emmancher le disque d'extrémité isolant (2) muni de la douille-entretoise (5, figure 6) moulée par injection d'un seul tenant avec le disque, sur une extrémité de l'arbre (8) du rotor, jusqu'à l'obtention d'une faible distance axiale "a" entre le disque d'extrémité isolant (2) et la face frontale du paquet (1) de tôles du rotor,

b) emmancher à force un autre disque d'extrémité isolant (15) sur l'autre face frontale du paquet (1) des tôles du rotor et éventuellement fixer par collage un collecteur (13) sur l'autre extrémité, qui fait saillie sur cette face frontale, de l'arbre (8) du rotor,

c) bobiner le rotor tout en serrant fermement, simultanément, le disque d'extrémité isolant (2) contre la face frontale du paquet (1) des tôles du rotor, sans modifier la position axiale de la douille-entretoise (5),

d) introduire le rotor bobiné dans le flasque de palier (10) situé du côté du collecteur et relié au stator,

e) monter l'autre flasque de palier (9) et, moyennant l'application d'une pression axiale, déplacer la douille- entretoise (5) maintenue selon un ajustement serré sur l'arbre (8) du rotor, par rapport au disque d'extrémité isolant fixé (2), et

f) éventuellement régler de façon précise le jeu axial en déplaçant le rotor par rapport à la douille-entretoise (5) alors que l'autre flasque de palier (9) est appliqué contre le stator.

FIG 1

FIG 2

FIG 3

FIG 4

FIG 5

FIG 6